# EUROPÄISCHE PATENTSCHRIFT

(11) **EP 2 512 069 B1**
(45) Veröffentlichungstag und Bekanntmachung des Hinweises auf die Patenterteilung: **15.07.2015**
(21) Anmeldenummer: 12001570.6
(22) Anmeldetag: 08.03.2012
(51) Int. Cl.: H04L 12/40, H04L 12/10, H04L 12/24, H04L 12/28, G06F 1/26, H04M 11/02

(54) **Haus-Kommunikationssystem mit mindestens einer Türstation und mindestens zwei Wohnungsstationen**
Building communication system with at least one door station and at least two residence stations
Système de communication interne doté d'au moins une station de porte et au moins deux stations d'habitation

(30) Priorität: 16.04.2011 DE 102011017367
(43) Veröffentlichungstag der Anmeldung: 17.10.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Schramm, Peter, 44269 Dortmund (DE)

(56) Entgegenhaltungen:
- EP-A1- 2 228 943
- WO-A1-2007/058871
- DE-A1-102006 036 770
- DE-B3-102006 051 133

## Beschreibung

Die Erfindung betrifft ein Haus-Kommunikationssystem mit mindestens einer Türstation und mindestens zwei Wohnungsstationen, wobei alle Stationen an einen Bus angeschlossen sind, über welchen sowohl die Kommunikation als auch die Energieversorgung abgewickelt wird und wobei eine Spannungsversorgungseinheit an den Bus angeschlossen ist.

Aus der DE 10 2006 051 133 B3 ist eine Hausanlage mit mindestens einer Wohnungsstation, einer Türstation, mindestens einem Türöffner und einem Bus bekannt, an den die Wohnungsstation, die Türstation und der Türöffner angeschlossen sind, wobei der Bus zur Versorgung des Türöffners mit Energie dient. Das Ansteuern des Türöffners bedarf verhältnismäßig großer Leistung. Ansprechend auf ein dem Türöffner zugeordnetes Türöffnersignal schaltet sich mindestens eine Wohnungsstation/Türstation hinsichtlich ihrer Energieversorgung vom Bus ab oder nimmt einen Energiesparmodus an.

*Die Druckschrift* WO2007/058871 A1*, offenbart eine Power over* Ethernet Spannungsversorgung bei welcher digitale Daten zusammen mit der Energieversorgung über das Datenkabel zu den Netzknoten gelangen. Die aktuelle Leistung wird dynamisch auf Basis der Aufgaben gesteuert, die von den betriebenen Gerät ausgeführt werden.

Die Druckschrift WO2007/058871 A1 und EP2228943 A1, offenbaren ein Power over Ethernet Verfahren zur verteilten Bereitstellung von Versorgungsenergie über ein Netzwerk von hintereinandergeschalteten Netzwerk-Geräten.

Die Topologie und die Anzahl der Teilnehmer - Türstation(en) und Wohnungsstationen - allgemein bekannter Haus-Kommunikationssysteme werden hauptsächlich durch die Leistungsaufnahme der einzelnen Stationen bestimmt (wobei bei den nachfolgenden Betrachtungen zur Vereinfachung der Türöffner der Türstation zugeordnet wird). Als Spannungsversorgungseinheit (Stromversorgung / Energieversorgung) wird dabei meist ein zentrales Schaltnetzteil eingesetzt, welches alle Stationen über einen Bus mit Strom/Energie versorgt und in seinem Arbeitsbereich die Leistungsabgabe regulieren kann. Um eine zu hohe Belastung der Spannungsversorgung zu vermeiden, erlauben allgemein bekannte Systeme nur sehr begrenzt den gleichzeitigen Betrieb mehrerer Stationen. Das Haus-Kommunikationssystem ist dann so ausgelegt, dass immer nur eine feste Anzahl an Stationen bestimmte Zustände haben darf, beispielsweise besteht bei einer Wohnungsstation Kommunikation mit der Türstation (Übertragung von Audio- und/oder Videosignalen) oder eine Wohnungsstation befindet sich im Konfigurationsmodus oder bei einer Wohnungsstation wird Klingeln durch Betätigung des zugeordneten Klingelknopfes bei der Türstation ausgelöst. Um diese Limitierung nicht zu überschreiten, wird durch eine entsprechende Signalisierung eine gerade beispielsweise im Konfigurationsmodus befindliche Station von diesem Modus abgeschaltet, sobald eine weitere Station in diesen Modus versetzt wird (Prinzip des "last wins"). Sind beide Stationen in unterschiedlichen Wohnungen montiert, kann diese Arbeitsweise aus Sicht des Nutzers / Anwenders als Fehlverhalten des Haus-Kommunikationssystems bzw. zumindest als sehr störend interpretiert werden.

Bei zu hoher Belastung wird der vorgesehene Arbeitsbereich der Spannungsversorgungseinheit (Schaltnetzteil) verlassen, wodurch es zur Überlastung des Schaltnetzteils und auch zu einer "unsauberen" Spannungsabgabe kommen kann. Bei zu hoher Last kann das Schaltnetzteil selbst beschädigt werden und es können andere angeschlossene Stationen in ihrer Funktion gestört werden.

Der Installateur muss genau die Systemanleitung und den vorgeschriebenen Maximalausbau des Haus-Kommunikationssystems beachten. Bei Stationen mit hoher Leistungsaufnahme muss der "schlechteste Fall" mit höchster Leistungsaufnahme beachtet werden. In diesem Fall können bei einer gemeinsamen Stromversorgung/Energieversorgung nur recht kleine Systemtopologien (mit nur wenigen Wohnungsstationen) realisiert werden.

Unter bestimmten Umständen kann ein erster Nutzer/Anwender die Bedienung seiner Wohnungsstation nicht zu Ende führen, weil ein anderer Nutzer/Anwender an einer anderen Wohnungsstation eine Bedienung beginnt, die eine Beendigung der Bedienung des ersten Nutzers/Anwenders erzwingt.

Der Erfindung liegt die Aufgabe zugrunde, ein hinsichtlich der Leistungsversorgung optimiertes Haus-Kommunikationssystem mit mindestens einer Türstation und mindestens zwei Wohnungsstationen anzugeben.

Diese Aufgabe wird in Verbindung mit Anspruch 1 erfindungsgemäß gelöst.

Die mit der Erfindung erzielbaren Vorteile liegen insbesondere darin, dass sich eine vereinfachte, für den Installateur übersichtlichere Systemtopologie des Haus-Kommunikationssystems ergibt. Es werden Arbeitsweisen vermieden, welche aus der Sicht des Nutzers/Anwenders als Fehlverhalten des Haus-Kommunikationssystems interpretiert werden können. Selbstverständlich wird eine Überlastung der Spannungsversorgungseinheit konsequent verhindert.

Dabei kann der Leistungs-Koordinator in Form eines separaten Gerätes ausgeführt sein oder in der Spannungsversorgungseinheit oder in der Türstation oder in einer Wohnungsstation implementiert sein.

Eine alternative Ausprägung besteht darin, dass in mehreren Stationen / Busteilnehmern oder in jeder Station / jedem Busteilnehmer ein Leistungs-Koordinator implementiert ist, wobei diese Leistungs-Koordinatoren als verteilte Einheiten miteinander kooperieren.

Eine Ausgestaltung der Erfindung besteht darin, dass der Leistungs-Koordinator auf Basis einer die Stationen betreffenden Prioritätenvorgabe entscheidet.

Zweckmäßig wird ein Haus-Kommunikationssystem größeren Umfangs in mindestens zwei Bus-Abschnitte unterteilt, welche über eine Trennstelle miteinander verbunden sind, welche hinsichtlich der Spannungsversorgung, nicht jedoch hinsichtlich der Kommunikation wirksam ist, wobei jedem Bus-Abschnitt eine eigene Spannungsversorgungseinheit sowie ein eigener Leistungs-Koordinator zugeordnet ist.

Die Erfindung wird nachstehend an Hand der in der Zeichnung dargestellten Ausführungsbeispiele erläutert. Es zeigen:
- Fig. 1: ein Haus-Kommunikationssystem mit einer Türstation und mehreren Wohnungsstationen, die an einen Bus angeschlossen sind,
- Fig. 2: ein gegenüber der Ausführungsform gemäß Fig. 1 erweitertes Haus-Kommunikationssystem.

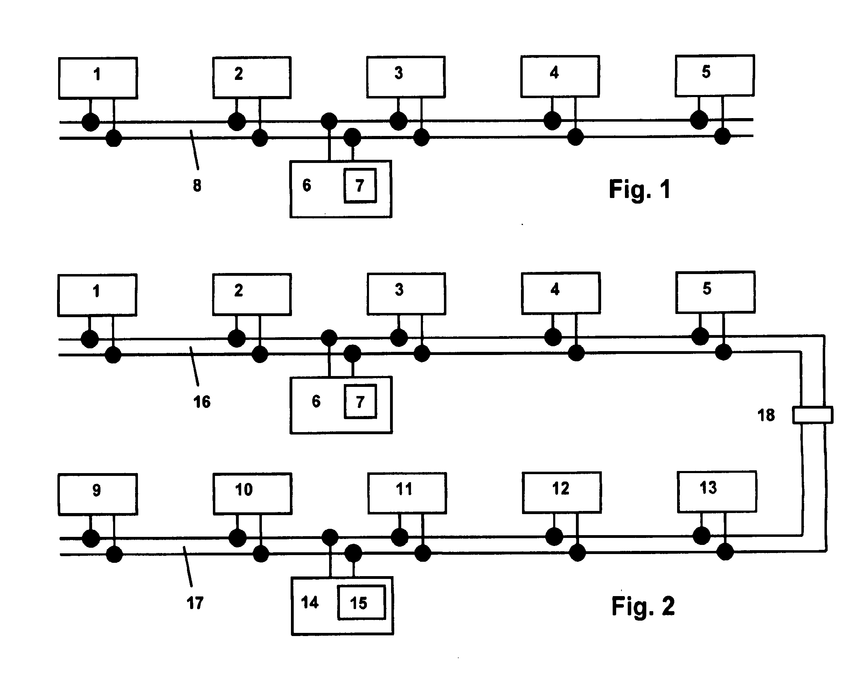

In Fig. 1 ist ein Haus-Kommunikationssystem dargestellt, mit einer Türstation und mehreren Wohnungsstationen, die an einen Bus, speziell einen Zwei-Draht-Bus, angeschlossen sind. Es sind eine Türstation 1 und vier Wohnungsstationen 2, 3, 4, 5 zu erkennen. Der Bus 8 dient sowohl zur Kommunikation zwischen den Stationen 1 - 5, als auch zur Energieversorgung. Eine vorzugsweise als Schaltnetzteil ausgebildete Spannungsversorgungseinheit 6 bewerkstelligt die Energieversorgung aller Stationen 1 - 5. Dabei enthält beispielsweise die Spannungsversorgungseinheit 6 einen Leistungs-Koordinator 7. Alternativ kann dieser Leistungs-Koordinator 7 auch in Form eines separaten Gerätes ausgebildet sein oder in einer oder mehreren der oder allen Stationen 1 - 6 integriert sein. Zusammengefasst kann der Leistungs-Koordinator 7 als logische Instanz angesehen werden, die auf einer beliebigen Station, also auch auf einer oder mehreren Türstation(en) oder Wohnungsstation(en) implementiert werden kann.

Wesentliches Kriterium des dargestellten Haus-Kommunikationssystems ist es, dass die Stationen 1 - 5 ihren zukünftig benötigten Energiebedarf zunächst beim Leistungs-Koordinator 7 anmelden/anfragen müssen. Der Leistungs-Koordinator 7 entscheidet bei Anmeldung/Anfrage von Energiebedarf auf Basis der ihm vorliegenden aktuellen Energieverbrauchswerte der Stationen 1 - 5, ob der angemeldete/angefragte zusätzliche Strombedarf/Energiebedarf bereitgestellt werden kann, oder ob die den Energiebedarf anmeldende/anfragende Station zunächst noch in einer "Ruheposition" verharren muss, bis ausreichend Energie zur Verfügung steht.

Dazu wird folgendes Vorgehen realisiert:
- Der Leistungs-Koordinator 7 misst kontinuierlich den aktuellen Strombedarf / Energiebedarf der angeschlossenen Stationen 1 - 5 (aktuelle Energieverbrauchswerte der Stationen). Gleichzeitig ist dem Leistungs-Koordinator 7 die maximal erlaubte Strombelastbarkeit/Energiebelastbarkeit der Spannungsversorgungseinheit 6 bekannt. Alternativ wird dem Leistungs-Koordinator der aktuelle Strombedarf / Energiebedarf der angeschlossenen Stationen 1 - 5 per Signal mitgeteilt.
- Die angeschlossenen Stationen 1 - 5 unterstützen mindestens zwei Power-Modi, und zwar einen "High-Power-Mode" und einen "Low-Power-Mode" entsprechend der vorstehend bereits erwähnten "Ruheposition". Im "High-Power-Mode" ist die volle Funktionalität gegeben, d. h. es ist Kommunikation zwischen Türstation und Wohnungsstation per Video- und/oder Audiosignal möglich, es ist eine Konfiguration einer Station möglich, bei Betätigung eines Klingelknopfes der Türstation wird ein Klingeln in den zugeordneten Wohnungsstationen ausgelöst, der Türöffner kann betätigt werden, es ist eine Kommunikation zwischen Leistungs-Koordinator 7 und den Stationen 1 - 5 möglich, usw. Im "Low-Power-Mode" sind die meisten Funktionen deaktiviert, einzig die Kommunikation (Signalaustausch) der Stationen 1 - 5 mit dem Leistungs-Koordinator 7 ist möglich. Zwischen "High-Power-Mode" und "Low-Power-Mode" kann es alternativ weitere Abstufungen geben, die abhängig von der Art der Station 1 - 5 unterschiedlich viel Strom/Energie benötigen.
- Der Normalbetrieb der Stationen 1 - 5 ist dadurch definiert, dass sich die Stationen im "Low-Power-Mode" befinden.
- Möchte nun eine der Stationen 1 - 5 vom "Low-Power-Mode" in den "High-Power-Mode" wechseln, meldet sie die zu erwartende Leistungsaufnahme (den zukünftig benötigten Energiebedarf) beim Leistungs-Koordinator 7 in Form eines Signals an.
- Der Leistungs-Koordinator 7 entscheidet auf Grundlage mehrerer Randbedingungen, wie aktuelle Energieverbrauchswerte der Stationen 1 - 5 respektive Leistungsabgabe der Spannungsversorgungseinheit 6 und/oder aktueller Spannungsabfall und/oder Busentfernung (Entfernung zwischen Station 1 - 5 und Spannungsversorgungseinheit 6) und/oder vorgegebene Priorität der anmeldenden/anfragenden Station, ob die angemeldete/angefragte zusätzliche Leistung (zukünftig benötigter Energiebedarf) bereitgestellt werden kann.
- Die anmeldende/anfragende Station 1 - 5 erhält vom Leistungs-Koordinator 7 eine entsprechende positive oder negative Nachricht in Form eines Signals. Bei Empfang einer positiven Nachricht wechselt die anmeldende/anfragende Station 1 - 5 dann zur Durchführung der gewünschten Funktion in den High-Power-Mode.
- Kann die angemeldete/angefragte Leistung nicht zur Verfügung gestellt werden, verbleibt die anmeldende/anfragende Station 1 - 5 zunächst im Low-Power-Mode. Dem Nutzer/Anwender kann dies entsprechend signalisiert werden, z. B. in Form einer aufleuchtenden LED.
- Des Weiteren kann über eine Prioritätenvorgabe nach Anwendungsfall entschieden werden, ob eine andere Station aus dem "High-Power-Mode" in den "Low-Power-Mode" versetzt wird, z.B. wenn dem Klingeln an der Tür eine höhere Priorität eingeräumt wird als eine Anwendung "digitaler Bilderrahmen". Hierzu gibt der Leistungs-Koordinator 7 entsprechende Signale an die betroffenen Stationen 1 - 5 ab.
- Wechselt eine Station 1 - 5 vom "High-Power-Mode" in den "Low-Power-Mode", so wird der Leistungs-Koordinator 7 in Form eines Signals ebenfalls benachrichtigt.
- Zusätzlich unterstützen der Leistungs-Koordinator 7 und die Stationen 1 - 5 ein Abfrageverfahren. Hierbei wird eine Nachricht in Form eines Signals an alle Stationen 1 - 5 versendet, die daraufhin ihren aktuellen Energieverbrauchswert in Form eines Signals auf den Bus 8 senden. Damit können Dateninkonsistenzen korrigiert werden, die nach längerer Betriebsdauer entstehen könnten.

Unter der zu erwartenden Leistungsaufnahme (zukünftig benötigter Energiebedarf) werden beispielsweise verstanden:
- Leistungsaufnahme zur Betätigung einer Klingel einer Wohnungsstation,
- Leistungsaufnahme zur Betätigung eines Türöffners,
- Leistungsaufnahme im Konfigurationsmodus,
- Leistungsaufnahme während einer Kommunikation (Sprachsignale) zwischen der Türstation und einer Wohnungsstation und umgekehrt,
- Leistungsaufnahme zur Übertragung von Videosignalen zwischen einer Kamera der Türstation und einem Display einer Wohnungsstation.

Generell kann die Anmeldung/Anfrage der Leistungsaufnahme auf unterschiedliche Art und Weise erfolgen:
- In einer ersten Ausführung ist der Station 1 - 5 bekannt, wie viel Leistung sie in welchem Modus verbraucht. Dieser Wert wird dann in Form eines Signals als absoluter Wert auf den Bus 8 gesendet und beim Leistungs-Koordinator 7 addiert bzw. subtrahiert.
- In einer zweiten Ausführung wird von der Station 1 - 5 in Form eines Signals ein relativer Wert auf den Bus 8 gesendet. Der relative Wert entspricht der Differenz vom aktuell vorliegenden Zustand zum gewünschten zukünftigen Zustand (zukünftig benötigter Energiebedarf).
- In einer dritten Ausführung wird kein konkreter Stromwert/Energiewert auf den Bus 8 gesendet, sondern eine codierte Information über Art der Station und den zukünftigen (gewünschten) Zustand (zukünftig benötigter Energiebedarf) in Form eines Signals. Im Leistungs-Koordinator 7 wird in diesem Fall eine Tabelle geführt, in der jedem Zustand einer Station 1 - 5 ein Stromverbrauchswert / Energieverbrauchswert zuordnet ist.

Bei größeren Haus-Kommunikationssystemen respektive Sprechstellenanlagen wird der Bus 8 in mehrere Bus-Abschnitte aufgeteilt, die leistungsmäßig voneinander getrennt sind. Jeder Bus-Abschnitt hat dabei eine eigene Spannungsversorgungseinheit, wobei das Management hinsichtlich eines koordinierten Energieverbrauchs der Stationen von einem je Bus-Abschnitt separaten Leistungs-Koordinator erfolgt.

In Fig. 2 ist ein solches, gegenüber der Ausführungsform gemäß Fig. 1 erweitertes Haus-Kommunikationssystem dargestellt. Der Bus ist dabei in zwei Bus-Abschnitte 16, 17 aufgeteilt, wobei diese beiden Bus-Abschnitte 16, 17 über eine Trennstelle 18 miteinander verbunden sind. Diese Trennstelle 18 ist wirksam hinsichtlich der Spannungsversorgung, nicht jedoch hinsichtlich der Kommunikation. An den Bus-Abschnitt 16 sind die Türstation 1 sowie die Wohnungsstationen 2, 3, 4 und 5 angeschlossen. Die Energieversorgung dieser Stationen 1 - 5 erfolgt mittels der Spannungsversorgungseinheit 6. Das Management hinsichtlich eines koordinierten Energieverbrauchs der Stationen 1 - 5 erfolgt über den Leistungs-Koordinator 7, wie vorstehend beschrieben. An den Bus-Abschnitt 17 sind Wohnungsstationen 9, 10, 11, 12 und 13 angeschlossen. Die Energieversorgung dieser Stationen 9 - 13 erfolgt mittels einer weiteren Spannungsversorgungseinheit 14. Das Management hinsichtlich eines koordinierten Energieverbrauchs der Stationen 9 - 13 erfolgt über einen weiteren Leistungs-Koordinator 15, wie vorstehend beschrieben.

### Bezugszeichenliste

- 1: Türstation
- 2: Wohnungsstation
- 3: Wohnungsstation
- 4: Wohnungsstation
- 5: Wohnungsstation
- 6: Spannungsversorgungseinheit (Schaltnetzteil)
- 7: Leistungs-Koordinator
- 8: Bus (Kommunikation und Spannungsversorgung)
- 9: Wohnungsstation
- 10: Wohnungsstation
- 11: Wohnungsstation
- 12: Wohnungsstation
- 13: Wohnungsstation
- 14: Spannungsversorgungseinheit (Schaltnetzteil)
- 15: Leistungs-Koordinator
- 16: Bus-Abschnitt
- 17: Bus-Abschnitt
- 18: Trennstelle bezüglich der Spannungsversorgung (nicht jedoch bezüglich der Kommunikation)

## Patentansprüche

1. Haus-Kommunikationssystem mit mindestens einer Türstation (1) und mindestens zwei Wohnungsstationen (2 - 5), wobei alle Stationen (1 - 5) an einen Zwei-Draht-Bus (8) angeschlossen sind, über welchen sowohl die Kommunikation als auch die Energieversorgung abgewickelt wird und wobei mindestens eine Spannungsversorgungseinheit (6, 14) an den Bus (8) angeschlossen ist, **dadurch gekennzeichnet,**
- **dass** eine Unterteilung in mindestens zwei Bus-Abschnitte (16, 17) erfolgt, welche über eine Trennstelle (18) miteinander verbunden sind, welche hinsichtlich der Spannungsversorgung, nicht jedoch hinsichtlich der Kommunikation wirksam ist, wobei jedem Bus-Abschnitt (16, 17) eine eigene Spannungsversorgungseinheit (6, 14) sowie mindestens ein eigener Leistungs-Koordinator (7, 15) zugeordnet ist,
- **dass** die mindestens zwei Leistungs-Koordinatoren (7, 15) für das Management hinsichtlich eines koordinierten Energieverbrauchs der Stationen (1 - 5) vorgesehen sind, welchen die aktuellen Energieverbrauchswerte der Stationen (1 - 5) und die maximal zulässige Energiebelastbarkeit der Spannungsversorgungseinheiten (6, 14) vorliegen und welche mit den Stationen (1 - 5) kommunizieren,
- **dass** die Stationen (1 - 5) ihren zukünftig benötigten Energiebedarf bei den mindestens zwei Leistungs-Koordinatoren (7, 15) anmelden/anfragen und die Leistungs-Koordinatoren (7, 15) auf Basis der ihnen vorliegenden aktuellen Energieverbrauchswerte und der maximal zulässigen Energiebelastbarkeit der Spannungsversorgungseinheiten (6, 14) entscheiden, ob der angefragte Energiebedarf von den Spannungsversorgungseinheiten (6, 14) bereitzustellen ist.

2. Haus-Kommunikationssystem nach Anspruch 1, **gekennzeichnet durch** eine Implementierung der Leistungs-Koordinatoren (7, 15) in den Spannungsversorgungseinheiten (6, 14).

3. Haus-Kommunikationssystem nach Anspruch 1, **gekennzeichnet durch** eine Implementierung der Leistungs-Koordinatoren (7, 15) in der Türstation (1).

4. Haus-Kommunikationssystem nach Anspruch 1, **gekennzeichnet durch** eine Implementierung der Leistungs-Koordinatoren (7, 15) in einer Wohnungsstation (2 - 5).

5. Haus-Kommunikationssystem nach einem der vorstehenden Ansprüche, **dadurch gekennzeichnet, dass** die Leistungs-Koordinatoren (7, 15) auf Basis einer die Stationen (1 - 6) betreffenden Prioritätenvorgabe entscheiden.

6. Haus-Kommunikationssystem nach einem der vorstehenden Ansprüche, **dadurch gekennzeichnet, dass** in mehreren Stationen / Busteilnehmern oder in jeder Station / jedem Busteilnehmer ein Leistungs-Koordinator implementiert ist, wobei diese Leistungs-Koordinatoren als verteilte Einheiten miteinander kooperieren.

## Claims

1. Building communication system having at least one door station (1) and at least two apartment stations (2 - 5), with all the stations (1 - 5) being connected to a two-wire bus (8) via which both the communication and the power supply are handled, and with at least one voltage supply unit (6, 14) being connected to the bus (8), **characterized**
- **in that** subdivision is effected into at least two bus sections (16, 17) which are connected to one another via an isolation point (18), which acts with respect to the voltage supply but not with respect to the communication, with each bus section (16, 17) having an associated dedicated voltage supply unit (6, 14) and at least one associated dedicated power coordinator (7, 15),
- **in that** the at least two power coordinators (7, 15) are provided for management of coordinated power consumption by the stations (1 - 5), for which the instantaneous power consumption values of the stations (1 - 5) and the maximum permissible power load capability of the voltage supply units (6, 14) are available, and which communicate with the stations (1 - 5),
- **in that** the stations (1 - 5) report/request their future required power consumption with the at least two power coordinators (7, 15), and the power coordinators (7, 15) decide on the basis of the instantaneous power consumption values available to them and the maximum permissible power load capability of the voltage supply units (6, 14) whether the requested power consumption can be provided by the voltage supply units (6, 14).

2. Building communication system according to Claim 1, **characterized by** implementation of the power coordinators (7, 15) in the voltage supply units (6, 14).

3. Building communication system according to Claim 1, **characterized by** implementation of the power coordinators (7, 15) in the door station (1).

4. Building communication system according to Claim 1, **characterized by** implementation of the power coordinators (7, 15) in an apartment station (2 - 5).

5. Building communication system according to one of the preceding claims, **characterized in that** the power coordinators (7, 15) make decisions on the basis of a predetermined priority relating to the stations (1 - 6).

6. Building communication system according to one of the preceding claims, **characterized in that** a power coordinator is implemented in a plurality of stations/bus subscribers or in each station/each bus subscriber, with these power coordinators cooperating with one another as distributed units.

## Revendications

1. Système de communication pour habitation présentant au moins un poste de porte (1) et au moins deux postes d'habitation (2-5), tous les postes (1-5) étant raccordés à un bus bifilaire (8) par lequel tant la communication que l'alimentation en énergie sont réalisées, au moins une unité (6, 14) d'alimentation en tension étant raccordée au bus (8),
**caractérisé en ce que**
une division en au moins deux parties (16, 17) de bus reliées l'une à l'autre par un emplacement de séparation (18) et qui est actif pour l'alimentation en tension mais ne l'est pas pour la communication est réalisée, une unité propre (6, 14) d'alimentation en tension ainsi qu'au moins un coordinateur propre (7, 15) de puissance étant associé à chaque partie (16, 17) de bus,
**en ce que** les deux ou plusieurs coordinateurs (7, 15) de puissance sont prévus pour gérer une consommation coordonnée en énergie des postes (1-5), les valeurs effectives de consommation en énergie des postes (1-5) et la capacité maximale admissible de sollicitation en énergie des unités (6, 14) d'alimentation en tension étant mises à disposition de ces coordinateurs de puissance qui communiquent avec les postes (1-5) et
**en ce que** les postes (1-5) annoncent/demandent leurs besoins futurs en énergie aux deux ou plusieurs coordinateurs (7, 15) de puissance, les coordinateurs (7, 15) de puissance décidant sur la base des valeurs actualisées de consommation en énergie qui leur sont présentées et de la capacité maximale admissible de sollicitation en énergie des unités (6, 14) d'alimentation en tension si les besoins en énergie demandés par les unités (6, 14) d'alimentation en énergie doivent être couverts.

2. Système de communication pour habitation selon la revendication 1, **caractérisé en ce que** les coordinateurs (7, 15) de puissance sont réalisés dans les unités (6, 14) d'alimentation en tension.

3. Système de communication pour habitation selon la revendication 1, **caractérisé en ce que** les coordinateurs (7, 15) de puissance sont réalisés dans le poste de porte (1).

4. Système de communication pour habitation selon la revendication 1, **caractérisé en ce que** les coordinateurs (7, 15) de puissance sont réalisés dans un poste d'habitation (2-5).

5. Système de communication pour habitation selon l'une des revendications précédentes, **caractérisé en ce que** les coordinateurs (7, 15) de puissance décident sur la base d'une prescription de priorité qui concerne les postes (1-6).

6. Système de communication pour habitation selon l'une des revendications précédentes, **caractérisé en ce qu'**un coordinateur de puissance est réalisé dans plusieurs postes et/ou participants au bus ou dans chaque poste et/ou participant au bus, ces coordinateurs de puissance coopérant les uns avec les autres en tant qu'unités réparties.
